# EUROPÄISCHE PATENTSCHRIFT

(11) **EP 1 294 530 B1**
(45) Veröffentlichungstag und Bekanntmachung des Hinweises auf die Patenterteilung: **28.04.2004**
(21) Anmeldenummer: 01971743.8
(22) Anmeldetag: 29.06.2001
(51) Int. Cl.: B23Q 1/01, B23Q 11/00

(54) **WERKZEUG-MASCHINE ZUR MINDESTENS 3-ACHSIGEN BEARBEITUNG VON WERKSTÜCKEN**
MACHINE TOOL FOR PROCESSING WORK PIECES ON AT LEAST THREE AXES
MACHINE-OUTIL DESTINEE A L'USINAGE AU MOINS TRIAXIAL DE PIECES

(30) Priorität: 29.06.2000 DE 10031730
(43) Veröffentlichungstag der Anmeldung: 26.03.2003
(73) Patentinhaber: Hüller Hille GmbH, 71636 Ludwigsburg (DE)
(72) Erfinder: GEIGER, Dietrich, 71723 Grossbottwar (DE); HORN, Wolfgang, 73035 Göppingen (DE); STENGELE, Gerald, 71636 Ludwigsburg (DE)
(74) Vertreter: Rau, Albrecht
(86) Internationale Anmeldenummer: PCT/EP2001/007486
(87) Internationale Veröffentlichungsnummer: WO 2002/000387

(56) Entgegenhaltungen:
- EP-A- 0 614 724
- EP-A- 0 820 835
- WO-A-96/00633
- DE-C- 19 803 563
- DATABASE WPI Section PQ, Week 199252 Derwent Publications Ltd., London, GB; Class P56, AN 1992-431211 XP002185697 -& SU 1 705 027 A (IGNATOVICH V S), 15. Januar 1992 (1992-01-15)
- GURYCHEV S E ET AL: "METAL CUTTING MACHINE TOOLS DETERMINING THE CONFIGURATION OF A MACHINING CENTRE" SOVIET ENGINEERING RESEARCH. (STANKI I INSTRUMENTY & VESTNIK MASHINOSTROENIA MASHINOSTROCNIE), ALLERTON PRESS, NEW YORK, US, Bd. 3, Nr. 2, 1. Februar 1983 (1983-02-01), Seiten 65-68, XP002045632

## Beschreibung

Die Erfindung betrifft eine Werkzeug-Maschine nach dem Oberbegriff des Anspruches 1.

Eine derartige Werkzeug-Maschine ist beispielsweise aus der EP 0 614 724 A2 (entspr. US 5,688,084 A) bekannt. Bei derartigen Werkzeug-Maschinen liegt die dem Werkstück-Tisch zugeordnete z-Führung unterhalb des Werkstück-Tisches. Dadurch ist die Abfuhr von Spänen behindert, was insbesondere bei der Trockenbearbeitung von Werkstücken zu Störungen führen kann.

Dieses Problem wird bei Werkstückzeug-Maschinen beseitigt, wie sie beispielsweise aus der EP 0 742 072 B1 (entsprechend US-Patent 5,662,568) und der EP 0 916 446 (entsprechend US-Ser. No. 09/161 891) bekannt sind. Bei diesen Werkzeug-Maschinen wird die das Werkzeug tragende Arbeits-Spindel in z-Richtung verschoben. Dies führt insbesondere bei langen Arbeitswegen in z-Richtung, beispielsweise beim Herstellen von Tiefbohrungen, zu einem, wenn auch geringen, Durchhang der Arbeits-Spindel. Die negativen Auswirkungen dieses Durchhangs auf die Präzision des Bearbeitungsvorgangs lassen sich nur durch komplizierte Kompensationsverfahren ausgleichen.

Aus der WO 96/00 633 ist eine Werkzeug-Maschine bekannt, bei der ein Werkzeugträger horizontal in einer Richtung verschiebbar angeordnet ist. Weiterhin ist ein Werkstückträger vorgesehen, der an einem horizontal, senkrecht zum Werkzeugträger und vertikal verfahrbaren Werkstückschlitten angebracht ist. Das Werkstück wird am Werkstückschlitten hängend angebracht und bearbeitet. Die Gesamtkonstruktion ist instabil und für eine extrem genaue Bearbeitung nicht geeignet.

Aus der EP 0 820 835 B1 (entsprechend US-Patent 5,940,948) ist eine Werkzeug-Maschine bekannt, die mit einem Palettenwechsler versehen ist, wobei das Werkstück zwar hängend bearbeitet wird, so daß die Späne nach unten fallen können; die Bearbeitungsbewegung in z-Richtung wird aber auch hierbei von der Arbeits-Spindel ausgeführt.

Aus der DE 198 03 563 C1 (entsprechend US-Patent 6,161,457) ist eine Werkzeug-Maschine, insbesondere eine Drehmaschine, mit einem hängenden Kreuzschlitten bekannt, an dessen Unterseite ein Reitstock und eine Arbeits-Spindel mit Spannfutter zur Aufnahme eines drehantreibbaren Werkstückes vorgesehen ist. Unterhalb dieses Kreuzschlittens ist ein vertikal verfahrbarer Schlitten angeordnet, der einen Werkzeug-Revolver trägt.

Aus der EP 0 785 040 A1 ist eine Werkzeug-Maschine bekannt, bei der die Werkstücke an einem revolverartigen, um eine vertikale Achse schwenkbaren Karussell befestigt sind. Die die Werkstücke hängend aufnehmenden Werkstück-Aufnahmen sind selber wieder drehantreibbar. Den einzelnen Bearbeitungsstationen sind auf vertikal angeordneten Kreuztischen befindliche Werkzeug-Revolver zugeordnet, die also zugestellt und längs der Drehachse des Werkstücks verfahren werden können.

Aus der EP 0 928 235 A1 (entsprechend US Ser. No. 09/269,611) ist es bekannt, eine Werkzeug-Maschine mit einem Maschinenbett und einem auf diesem angeordneten Ständer derart weiterzubilden, daß auf dem Maschinenbett auch ein rahmenartiger Werkstück-Träger angeordnet ist, der mit dem rahmenartigen Ständer über einen oder mehrere Verbindungsträger zu einer stabilen Einheit verbunden ist.

Der Erfindung liegt die Aufgabe zugrunde, eine Werkzeug-Maschine der gattungsgemäßen Art so weiterzubilden, daß bei guter Späneabfuhr eine hochpräzise Bearbeitung von Werkstücken, insbesondere in z-Richtung, möglich ist.

Diese Aufgabe wird erfindungsgemäß durch die Merkmale im Kennzeichnungsteil des Anspruches 1 gelöst. Dadurch, daß das Werkstück hängend bearbeitet wird und die Arbeits-Bewegungen des Werkstücks in z-Richtung vom Werkstück aus geführt werden, erfolgt eine hochpräzise Bearbeitung der Werkstücke, insbesondere in z-Richtung. Gleichzeitig wird ein besonders präziser und damit positionsgenauer Antrieb des z-Schlittens erreicht. Die hohe Präzision wird insbesondere gefördert durch die Maßnahme nach Anspruch 2.

Die Maßnahmen nach den Ansprüchen 3 und 4 fördern ebenfalls die Präzision der Bearbeitung in z-Richtung.

Die Ansprüche 6 und 7 geben vorteilhafte Ausgestaltungen der Werkstück-Aufnahmemittel am z-Schlitten wieder.

Die Maßnahmen nach Anspruch 8 dienen der Späne-Abfuhr unterhalb des Werkstücks.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Seitenansicht einer Werkzeug-Maschine mit einer Be- und Entlade-Einrichtung,
- Fig. 2: die Werkzeug-Maschine nach Fig. 1 in einer Stirnansicht entsprechend der Schnittlinie II-II in Fig. 1,
- Fig. 3: eine Draufsicht auf die Be- und Entlade-Einrichtung entsprechend dem Sichtpfeil III in Fig. 1,
- Fig. 4: eine perspektivische Draufsicht auf eine schematisch dargestellte, Anlage nach der Erfindung und
- Fig. 5 bis 7: eine Werkzeug-Maschine mit einer Be- und Entlade-Einrichtung in stark schematisierter Seitenansicht, mit jeweils unterschiedlichen Positionen der Werkstück-Übergabemittel und Werkstück-Aufnahmemittel.

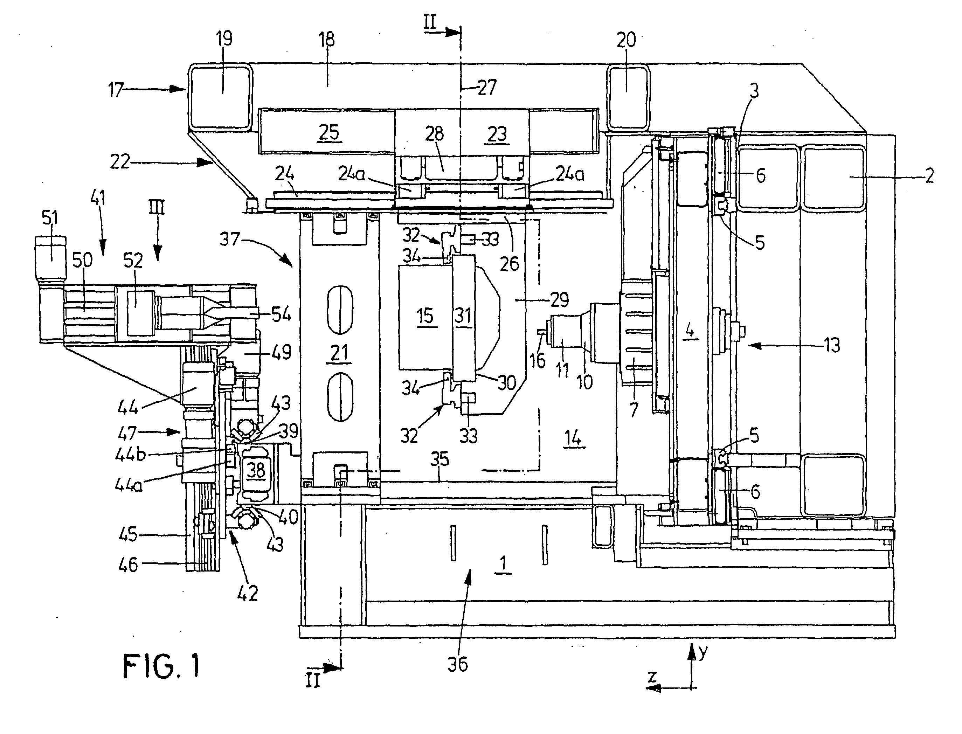

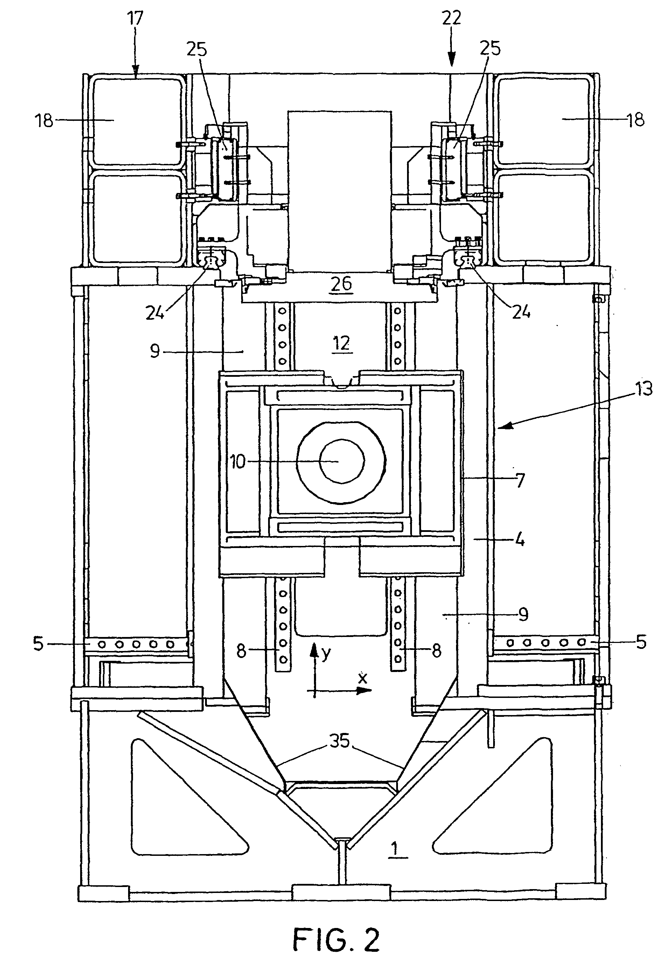

Wie sich insbesondere aus den Figuren 1 und 2 ergibt, ist auf einem Maschinenbett 1 ein rahmenartig ausgebildeter Ständer 2 angebracht. An einer Stirnseite 3 des Ständers 2 ist ein horizontal in einer x-Richtung verfahrbarer x-Schlitten 4 auf x-Führungen 5 verschiebbar angebracht. Der Antrieb erfolgt mit x-Linearmotoren 6. Am x-Schlitten 4 ist wiederum ein vertikal in y-Richtung verfahrbarer y-Schlitten 7 auf y-Führungen 8 verschiebbar angebracht. Der Antrieb erfolgt mittels y-Linearmotoren 9. Auf dem y-Schlitten 7 wiederum ist eine von einem nicht dargestellten Motor drehantreibbare Arbeits-Spindel 10 gelagert, die an ihrem dem Ständer 2 abgewandten Ende eine Werkzeug-Aufnahme 11 aufweist. Die Arbeits-Spindel 10 erstreckt sich in Richtung zum Ständer 2 durch eine im x-Schlitten 4 ausgebildete, zwischen den y-Führungen 8 angeordnete Öffnung 12 in den rahmenartigen Ständer 2 hinein. Die Arbeits-Spindel 10 erstreckt sich also in einer z-Richtung senkrecht zu einer durch die x-Richtung und die y-Richtung aufgespannten vertikalen Ebene. Die bisher geschilderte, als Kreuzschlitten ausgebildete Arbeits-Spindel-Bewegungs-Einheit 13 hat einen Grundaufbau, der als Box-in-a-box-Bauweise allgemein bekannt ist und beispielsweise in der EP 0 742 072 B1 (entsprechend US 5,662,568 A) dargestellt und beschrieben ist. Alternativ kann die Verschiebbarkeit der Arbeits-Spindel in der x-y-Ebene auch durch Koppeln erfolgen, wie sie aus der EP 0 916 446 A1 (entsprechend US-Ser. No. 09/161 891) bekannt sind.

Vor der Werkzeug-Aufnahme 11 und der Arbeits-Spindel 10 befindet sich ein Arbeitsraum 14, in dem ein Werkstück 15 mittels eines in der Werkzeug-Aufnahme 11 gehaltenen Werkzeugs 16 bearbeitet wird. Oberhalb dieses Arbeitsraumes 14 ist ein oberer Rahmen 17 angeordnet, der aus sich in z-Richtung erstreckenden Längsträgern 18 und sich in x-Richtung erstreckenden Querträgern 19, 20 besteht, und der sich an seinem dem Ständer 2 abgewandten Ende über Stützen 21 auf dem Maschinenbett 1 abstützt. Diese insgesamt sehr steife Bauweise eines aus dem Maschinenbett 1, dem Ständer 2, dem Rahmen 17 und den Stützen 21 bestehenden MaschinenGestells 22 ist von großem Vorteil. Dieses Maschinen-Gestell 22 umgrenzt den Arbeitsraum 14.

Zwischen den Längsträgern 18 des Rahmens 17 ist ein in z-Richtung bewegbarer z-Schlitten 23 auf z-Führungen 24 mittels Führungsschuhen 24a verschiebbar geführt. Der Antrieb erfolgt mittels z-Linearmotoren 25. Alternativ kann der Antrieb in x-, y- und z-Richtung auch mittels Rotations-Motoren, beispielsweise also Elektro-Motoren, über Kugelrollspindeln erfolgen.

An der Unterseite des z-Schlittens 23 ist ein Werkstück-Drehtisch 26 angebracht, der um seine vertikale, also in y-Richtung verlaufende Mittel-Achse 27 mittels eines Drehantrieb-Motors 28 drehantreibbar gelagert ist. An der Unterseite des Drehtisches 26 ist ein als Werkstück-Träger 29 ausgebildetes Werkstück-Aufnahmemittel angebracht, der eine Ausnehmung 30 aufweist, die einem das Werkstück 15 tragenden, im wesentlichen plattenförmig ausgebildeten Adapter 31 angepaßt ist. Der Träger 29 weist weiterhin als Haltemittel Spann-Vorrichtungen 32 auf, die mittels Spann-Antrieben 33 betätigbar sind. Die Spann-Vorrichtungen 32 halten den Adapter 31 mittels Spann-Backen 34 in der Ausnehmung 30 des Trägers 29, wodurch das in einer genau definierten Lage auf dem Adapter 31 montierte Werkstück 15 wiederum eine genau definierte Lage relativ zum Träger 29 und damit zum Drehtisch 26 erhält.

Die Spann-Vorrichtungen 32 befinden sich oberhalb und unterhalb der Ausnehmung 30, halten den Adapter 31 also in seinem oberen und seinem unteren Bereich. Wie insbesondere Fig. 1 entnehmbar ist, ragt das Werkstück 15 in jeder Position des z-Schlittens 23 und jeder Drehstellung des Drehtisches 26 über den gesamten Arbeitsraum 14 in eine vom Werkstück-Träger 29 freie Lage vor. Unterhalb von ihm befinden sich im Maschinenbett 1 ausgebildete Späne-Abförder-Einrichtungen 35 in Form von Späne-Rutschen.

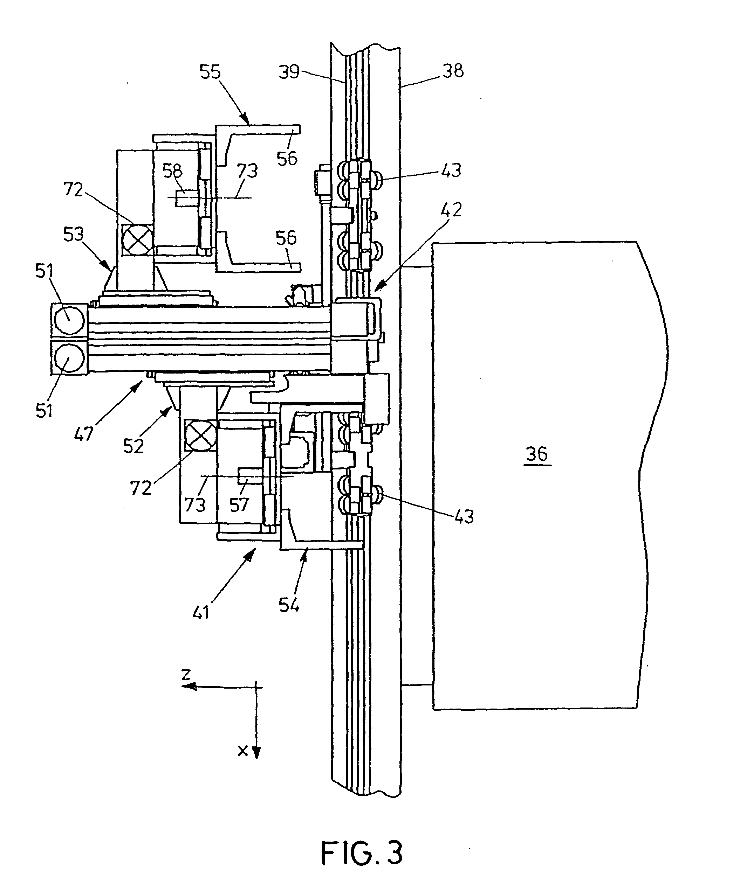

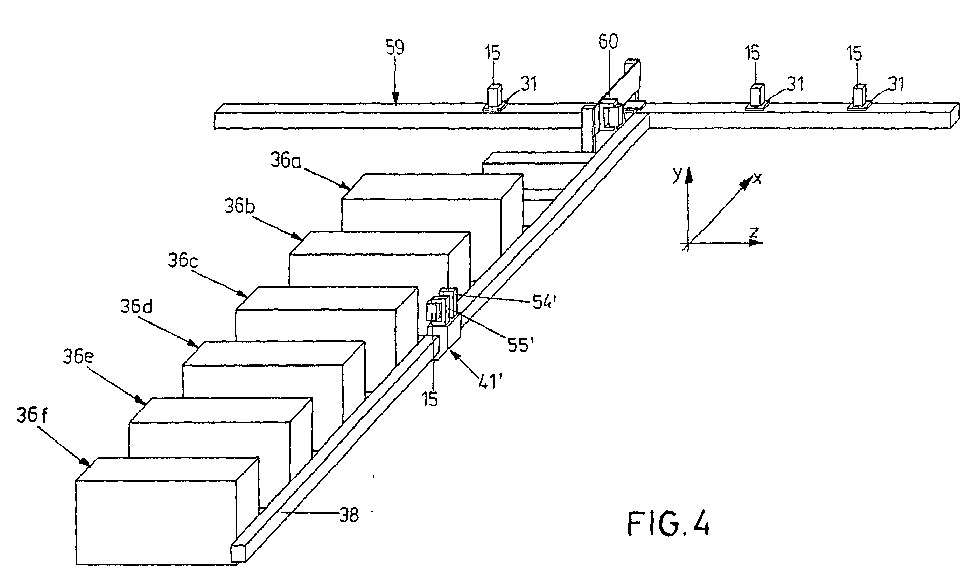

Von den bisher geschilderten Werkzeug-Maschinen 36 werden mehrere grundsätzlich gleichartig ausgebildete, aber für unterschiedliche Bearbeitungsvorgänge an demselben Werkstück 15 vorgesehene Werkzeug-Maschinen 36a bis 36f (siehe Fig. 4) nebeneinander in einer in x-Richtung verlaufenden Reihe angeordnet, die zu einem flexiblen Produktionssystem verkettet sind. In Fig. 3 sind hiervon nur zwei Werkzeugmaschinen 36a, 36b dargestellt.

An der Be- und Entlade-Seite 37, die den Stützen 21 zugeordnet ist, die also an der der Arbeits-Spindel-Bewegungs-Einheit 13 entgegengesetzten Seite der Werkzeug-Maschinen 36a bis 36f liegt, ist eine die Maschinen 36a bis 36f verbindende Transportbahn 38 vorgesehen, die an den Maschinen-Gestellen 22, insbesondere dem jeweiligen Maschinenbett 1, befestigt ist. Die Transportbahn 38 weist jeweils eine obere und eine untere Prismen-Führung 39, 40 auf, auf der eine Be- und Entlade-Einrichtung 41 in x-Richtung verschiebbar geführt ist. Sie weist als x-Schlitten einen Horizontal-Transport-Wagen 42 auf, der mittels in x-Richtung beabstandeter Rollen 43 spielfrei und verkantungsfrei auf den Führungen 39, 40 verschiebbar geführt ist. Der Antrieb erfolgt mittels eines als Getriebe-Motor ausgebildeten x-Elek-tro-Motors 44 über ein Zahnrad 44a und eine Zahnstange 44b oder alternativ über einen Zahnriementrieb. Alternativ kann der Antrieb auch mittels eines Linearmotors, insbesondere mittels eines Langstator-Linerantriebes, erfolgen.

Der Wagen 42 weist einen sich vertikal, also in y-Richtung erstreckenden Träger 45 auf, auf dem ein vertikal, also in y-Richtung, verschiebbarer y-Schlitten 47 mittels y-Führungen 46 verschiebbar angeordnet ist. Der Antrieb erfolgt jeweils mittels eines y-Elektro-Motors 49. Der sich im wesentlichen horizontal in z-Richtung erstreckende y-Schlitten 47 weist zwei z-Schienen 50 auf, auf denen jeweils ein jeweils von einem z-Elektro-Motor 51 antreibbarer z-Schlitten 52 bzw. 53 als z-Verschiebe-Einrichtung in z-Richtung verschiebbar geführt ist.

Die jeweils in x-Richtung vom y-Schlitten 47 in x-Richtung vorkragenden z-Schlitten 52, 53 tragen als Werkstück-Übergabemittel in z-Richtung zum Arbeitsraum 14 hin gerichtete Werkstück-Greifer 54 bzw. 55, die mit Greif-Backen 56 versehen sind, die jeweils mittels eines Greif-Backen-Antriebs 57 bzw. 58 geöffnet bzw. geschlossen werden können. Die Werkstück-Greifer 54, 55 sind also in y- Richtung gemeinsam und in z-Richtung unabhängig voneinander verfahrbar und können unabhängig voneinander geöffnet bzw. geschlossen werden. In x-Richtung haben sie eine zueinander vorgegebene feste Lage am Träger 45 des Wagens 42. Weiterhin ist jeweils ein Drehantrieb 54a bzw. 55a vorgesehen, mittels dessen der jeweilige Greifer 54 bzw. 55 um seine in z-Richtung verlaufende Mittelachse 54b bzw. 55b verschwenkbar ist.

Die Arbeitsweise wird anhand der Fig. 1 bis 3 und der Figuren 4 bis 7 erläutert, wobei letztere gegenüber der Ausgestaltung nach den Figuren 1 bis 3 stark vereinfacht sind. Aus diesem Grunde werden gegenüber den Figuren 1 bis 3 wesentlich vereinfachte Baugruppen mit derselben Bezugsziffer wie in Fig. 1 bis 3 bezeichnet, die aber mit einem hochgesetzten Strich versehen ist.

Wie der bereits erwähnten Fig. 4 zu entnehmen ist, sind eine größere Zahl von Werkzeug-Maschinen 36a bis 36fmittels der Transportbahn 38 miteinander verkettet, auf der die Be- und Entlade-Einrichtung 41' in x-Richtung verfahrbar ist. Der Transportbahn 38 ist eine Zu- und Abförder-Einrichtung 59 vorgeordnet, wobei es sich beispielsweise um ein Förderband handeln kann, auf dem zu bearbeitende Werkstücke 15, beispielsweise auf den Adaptern 31 zugeführt und fertigbearbeitete Werkstücke 15 entsprechend mit ihren Adaptern 31 abgefördert werden. Zum Umsetzen der Werkstücke 15 von der Zu- und Abförder-Einrichtung 59 auf die Be- und Entlade-Einrichtung 41 bzw. von dieser auf die Zu- und Abförder-Einrichtung 59 ist eine Umsetz-Einrichtung 60 an der Stelle vorgesehen, wo sich die Transportbahn 38 und die Zu- und Abförder-Einrichtung 59 treffen.

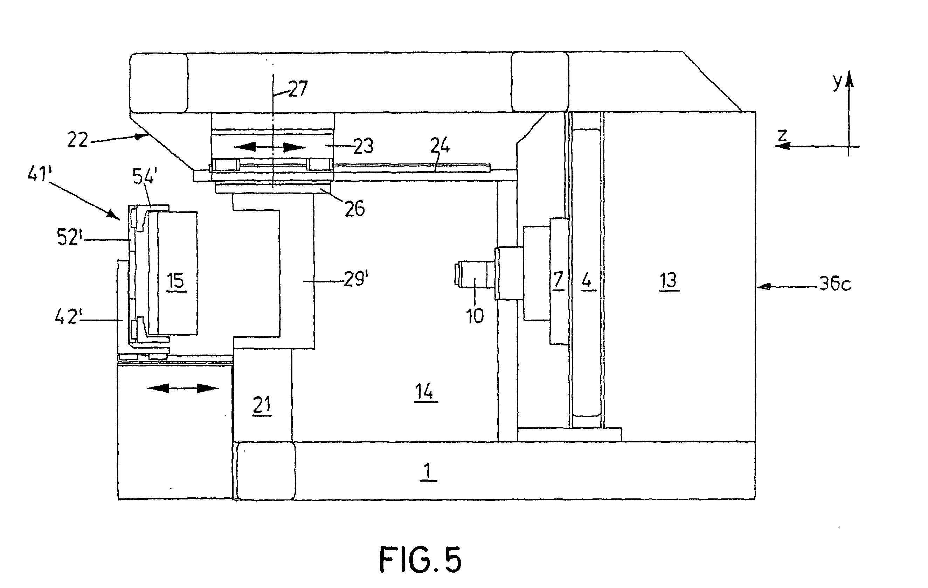

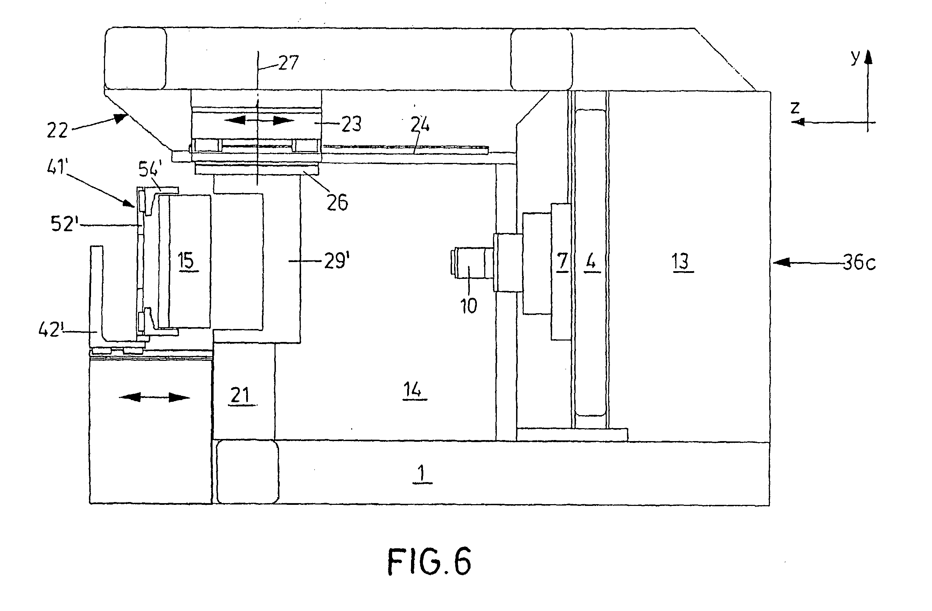

Wenn - wie während eines üblichen Fertigungsablaufes zu unterstellen ist - sich im Werkstück-Träger 29' ein bereits bearbeitetes Werkstück 15 befindet, dann befindet sich der Werkstück-Drehtisch 26 mit dem Werkstück-Träger 29' in der in Fig. 1, 5 und 6 dargestellten Übergabe-Position, die der Be- und Entlade-Einrichtung 41' benachbart ist. In dieser Stellung ist der Drehtisch 26 so verschwenkt, daß das in dieser Position in den Fig. 5 und 6 nicht dargestellte Werkstück 15 zur Einrichtung 41' hin gerichtet ist. Der kein Werkstück 15 enthaltende Greifer 54' kann dann durch entsprechendes Verfahren in y- und z-Richtung und Schließen der Greif-Backen 56 das Werkstück 15 ergreifen und nach Lösen der Spann-Backen 34 aus dem Träger 29' entnehmen. Der Greifer 54' wird dann in z-Richtung aus der Werkzeug-Maschine 36c herausgefahren. Danach wird der Horizontal-Transport-Wagen 42 so weit in x-Richtung und der Werkstück-Greifer 55' gegebenenfalls in y-Richtung so weit verfahren, daß das von ihm gehaltene zu bearbeitende Werkstück 15 vor den noch in der Übernahme-Position befindlichen Werkstück-Träger 29' gelangt, wie es in Fig. 5 dargestellt ist.

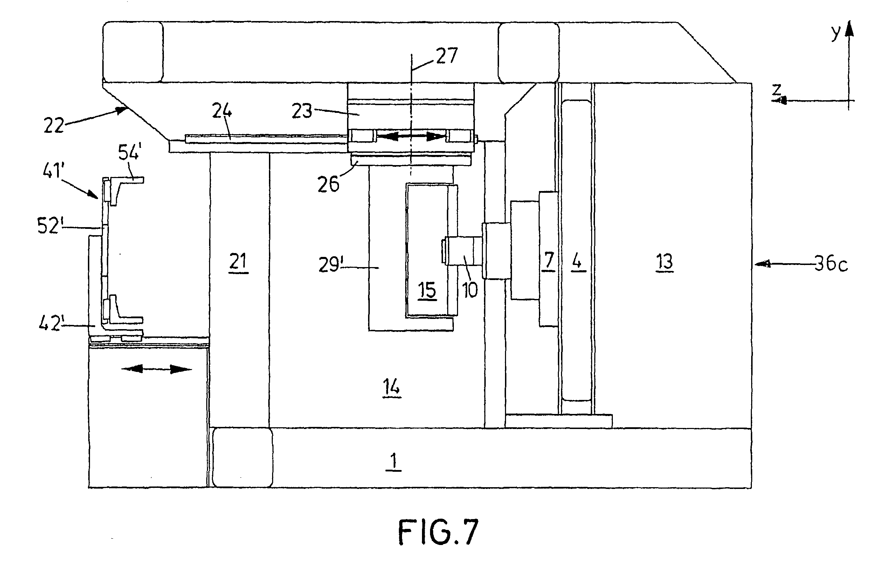

Anschließend wird der das zu bearbeitende Werkstück 15 haltende z-Schlitten 53' mit dem Greifer 55' aus der in Fig. 5 dargestellten x-Transport-Position entsprechend Fig. 6 zum Werkstück-Träger 29' hin verfahren, und zwar so weit, bis dieser das Werkstück 15 so aufnehmen kann, wie es in den Fig. 1 bis 3 dargestellt und oben geschildert ist. Nach dem Schließen der Spann-Vorrichtungen 32 werden die Greif-Backen 56 geöffnet, so daß das Werkstück 15 nunmehr ausschließlich im Werkstück-Träger 29 gehalten wird. Der z-Schlitten 23 wird dann in z-Richtung in Richtung auf das Werkzeug 16 verfahren, wobei es gleichzeitig um die Achse 27 geschwenkt wird. In der in Fig. 7 dargestellten Position wird es dann bearbeitet. Die Relativbewegung zwischen dem Werkzeug 16 und dem Werkstück 15 werden hierbei durch den x-Schlitten 4, den y-Schlitten 7, den z-Schlitten 23 und den Drehtisch 26 ausgeführt.

Der Rücktransport des bearbeiteten Werkstücks 15' erfolgt dann in der bereits geschilderten Weise unter Verfahren des z-Schlittens 23 und unter Drehen des Werkstück-Drehtisches 26 in die Übergabe-Position.

Eine Bearbeitung erfolgt an jeder Werkzeug-Maschine 36a bis 36f. Damit alle Maschinen gleichzeitig arbeiten können, befinden sich auf der Transportbahn 38 eine oder mehrere Be- und Entlade-Einrichtungen.

## Patentansprüche

1. Werkzeug-Maschine zur mindestens 3-achsigen Bearbeitung von Werkstücken (15) mit
- einem Maschinenbett (1)
- einem mit dem Maschinenbett (1) verbundenen Ständer (2),
- einer mittels einer am Ständer (2) angeordneten Arbeits-Spindel-Bewegungs-Einheit (13) in einer durch eine vertikale x-Richtung und eine horizontale y-Richtung aufgespannten Ebene bewegbaren, zur Aufnahme eines Werkzeugs (16) ausgebildeten, senkrecht zu der Ebene in einer z-Richtung verlaufenden Arbeits-Spindel (10), und
- einem in z-Richtung vor der Arbeits-Spindel (10) auf dem Maschinenbett (1) angeordneten Arbeitsraum (14) mit einem im Arbeitsraum (14) angeordneten, in z-Richtung verschiebbaren z-Schlitten (23), der Werkstück-Aufnahmemittel (29) mit Haltemitteln (32) für ein Werkstück (15) aufweist,
**dadurch gekennzeichnet,**
**daß** der z-Schlitten (23) oberhalb des Arbeitsraumes (14) und der Arbeits-Spindel (10) angeordnet ist,
**daß** das Werkstück-Aufnahmemittel (29) nach unten hängend mit dem z-Schlitten (23) verbunden ist,
**daß** der z-Schlitten (23) an einem oberhalb des Arbeitsraumes (14) angeordneten Rahmen (17) auf z-Führungen (24) verschiebbar gelagert ist, und
**daß** der Rahmen (17), der Ständer (2), das Maschinenbett (1) und den Rahmen (17) auf einer von der Arbeits-Spindel (10) abgewandten Seite mit dem Maschinenbett (1) verbindende Stützen (21) als ein in sich steifes, den Arbeitsraum (14) begrenzendes Maschinen-Gestell (22) ausgebildet sind.

2. Werkzeug-Maschine nach Anspruch 1, **dadurch gekennzeichnet,**
**daß** der z-SchIitten (23) mittels mindestens eines z-Linear-Motors (25) in z-Richtung antreibbar ist.

3. Werkzeug-Maschine nach Anspruch 1, **dadurch gekennzeichnet,**
**daß** die Arbeits-Spindel (10) auf einem durch einen y-Schlitten (7) und einen x-Schlitten (4) gebildeten Kreuzschlitten angeordnet ist.

4. Werkzeug-Maschine nach Anspruch 1, **dadurch gekennzeichnet,**
**daß** die Arbeits-Spindel (10) in z-Richtung unverschiebbar ist.

5. Werkzeug-Maschine nach Anspruch 1, **dadurch gekennzeichnet,**
**daß** das Werkstück-Aufnahmemittel (29) Haltemittel (32) für ein Werkstück (15) oder einen ein Werkstück (15) tragenden Adapter (31) aufweist.

6. Werkzeug-Maschine nach Anspruch 1, **dadurch gekennzeichnet,**
**daß** das Werkstück-Aufnahmemittel (29) eine Ausnehmung (30) für einen ein Werkstück (15) tragenden Adapter (31) aufweist.

7. Werkzeug-Maschine nach Anspruch 6, **dadurch gekennzeichnet,**
**daß** das Haltemittel (32) als Spann-Vorrichtung (32) ausgebildet ist.

8. Werkzeug-Maschine nach Anspruch 1, **dadurch gekennzeichnet,**
**daß** unterhalb des Werkstück-Aufnahmemittels (29) und der Arbeits-Spindel (10) eine Späne-Abförder-Einrichtung (35) vorgesehen ist.

9. Werkzeug-Maschine nach Anspruch 1, **dadurch gekennzeichnet,**
**daß** an dem z-Schlitten ein um eine in y-Richtung verlaufende Achse (27) drehbarer Werkstück-Drehtisch (26) angeordnet ist, an dem das Werkstück-Aufnahmemittel (29) hängend angebracht ist.

## Claims

1. A machine tool for at least triaxially machining work pieces (15), comprising
- a machine bed (1);
- a frame (2) joined to the machine bed (1);
- a work spindle (10), which, by means of a work spindle motion unit (13) that is disposed on the frame (2), is movable on a plane spanned by a vertical x direction and a horizontal y direction, and which is designed for holding a tool (16), and which extends vertically to the plane in a z direction; and
- a working area (14), disposed on the machine bed (1) before the work spindle (10) in the z direction, with a z skid (23), which is disposed within the working area (14) and displaceable in the z direction and which includes a work holding fixture (29) with holding means (32) for a work piece (15);
**characterized**
**in that** the z skid (23) is disposed above the working area (14) and the work spindle (10);
**in that** the work holding fixture (29) is joined to, and suspended downwards from, the z skid (23);
**in that** the z skid (23) is mounted on a frame (17) for displacement on z guides (24), the frame (17) being disposed above the working area (14); and
**in that** the frame (17), the frame (2), the machine bed (1) and props (21), which connect the frame (17) with the machine bed (1) on a side that faces away from the work spindle (10), form an inherently rigid machine frame (22) that defines the working area (14).

2. A machine tool according to claim 1, **characterized**
**in that** the z skid (23) is drivable in the z direction by at least one z linear motor (25)

3. A machine tool according to claim 1, **characterized**
**in that** the work spindle (10) is disposed on a compound slide rest formed by a y skid (7) and an x skid (4).

4. A machine tool according to claim 1, **characterized**
**in that** the work spindle (10) is non-displaceable in the z direction.

5. A machine tool according to claim 1, **characterized**
**in that** the work holding fixture (29) includes holding means (32) for a work piece (15) or a fitting piece (31) that holds a work piece (15).

6. A machine tool according to claim 1, **characterized**
**in that** the work holding fixture (29) has a recess (30) for a fitting piece (31) that holds a work piece (15).

7. A machine tool according to claim 7, **characterized**
**in that** the holding means (32) is a chucking device (32).

8. A machine tool according to claim 1, **characterized**
**in that** a chip removal arrangement (35) is provided underneath the work holding fixture (29) and the work spindle (10).

9. A machine tool according to claim 1, **characterized**
**in that** disposed on the z skid is a work piece turntable (26), which is rotatable about an axis (27) that runs in the y direction and from which the work holding fixture (29) is suspended.

## Revendications

1. Machine-outil destinée à l'usinage au moins sur trois axes de pièces (15) comprenant :
- un banc (1)
- un montant (2) relié au banc (1),
- une broche principale (10) déplaçable dans un plan défini par un sens vertical x et un sens horizontal y, au moyen d'une unité de déplacement de la broche principale (13) disposée sur un montant (2), conçue pour recevoir un outil (16) et perpendiculaire au plan dans un sens z, et
- un espace de travail (14) disposé dans le sens z avant la broche principale (10) sur le banc (1) comportant un chariot z (23) disposé dans l'espace de travail (14), déplaçable dans le sens z, qui présente un porte-pièce (29) comprenant des moyens de retenue (32) pour une pièce (15),
**caractérisée**
**en ce que** le chariot z (23) est disposé au-dessus de l'espace de travail (14) et de la broche principale (10),
**en ce que** le porte-pièce (29) est relié au chariot z (23) en suspension vers le bas,
**en ce que** le chariot z (23) repose, de manière mobile, sur des glissières z (24) sur un cadre (17) disposé au-dessus de l'espace de travail (14) et
**en ce que** le cadre (17), le montant (2), le banc (1) et les appuis (21) reliant le cadre (17) sur un côté opposé à la broche principale (10) et le banc (1) sont conçus comme un châssis (22) rigide en soi et limitant l'espace de travail (14).

2. Machine-outil selon la revendication 1, **caractérisée en ce que** le chariot z (23) puisse être entraîné au moyen d'au moins un moteur linéaire z (25) dans le sens z.

3. Machine-outil selon la revendication 1, **caractérisée en ce que** la broche principale (10) est disposée sur un chariot croisé formé par un chariot y (7) et un chariot x (4).

4. Machine-outil selon la revendication 1, **caractérisée en ce que** la broche principale (10) n'est pas mobile dans le sens z.

5. Machine-outil selon la revendication 1, **caractérisée en ce que** le porte-pièce (29) présente des moyens de retenue (32) pour une pièce (15) ou un adaptateur (31) portant une pièce (15).

6. Machine-outil selon la revendication 1, **caractérisée en ce que** le porte-pièce (29) présente un évidement (30) destiné à un adaptateur (31 ) portant une pièce (15).

7. Machine-outil selon la revendication 6, **caractérisée en ce que** le moyen de retenue (32) est conçu en tant que dispositif de serrage (32).

8. Machine-outil selon la revendication 1, **caractérisée en ce que**, sous le porte-pièce (29) et la broche principale (10), il est prévu un dispositif d'évacuation des copeaux (35).

9. Machine-outil selon la revendication 1, **caractérisée en ce que**, sur le chariot z, est disposée une table de travail rotative (26) tournant autour d'un axe (27) s'étendant dans le sens y, à laquelle le porte-pièce (29) est suspendu.
